(19) Europäisches Patentamt

European Patent Office

Office européen des brevets

(11) **EP 1 614 701 A2**

(12) **EUROPÄISCHE PATENTANMELDUNG**

(43) Veröffentlichungstag:
    **11.01.2006 Patentblatt 2006/02**

(51) Int Cl.:
    *C08G 18/08* (2006.01)     *C08G 18/10* (2006.01)
    *C08G 18/42* (2006.01)

(21) Anmeldenummer: 05011580.7

(22) Anmeldetag: **30.05.2005**

(84) Benannte Vertragsstaaten:
    **AT BE BG CH CY CZ DE DK EE ES FI FR GB GR
    HU IE IS IT LI LT LU MC NL PL PT RO SE SI SK TR**
    Benannte Erstreckungsstaaten:
    **AL BA HR LV MK YU**

(30) Priorität: **07.06.2004 DE 102004027705**

(71) Anmelder: **Bayer MaterialScience AG
    51368 Leverkusen (DE)**

(72) Erfinder:
    • **Frauenkron, Günter
      51399 Burscheid (DE)**
    • **Heidingsfeld, Herbert
      50226 Frechen (DE)**

(54) **Verfahren zur Herstellung von Polyurethan- und/oder Polyurethanharnstoff-Prepolymeren**

(57) Die Erfindung beschreibt ein Verfahren zur Herstellung von Polyurethan- und/oder Polyurethanharnstoff-Prepolymeren, bei dem wenigstens ein Diisocyanat (20) mit einer Polyhydroxyverbindung und/oder Polyaminoverbindung (30) mit einem Molekulargewicht von 400 bis 10000 in einer Mischdüse (1) vermischt wird, welche wenigstens einen Einlass (2) für das Diisocyanat (20), einen Einlass (3) für die Polyhydroxyverbindung und/oder Polyaminoverbindung (30) und einen Düsenkanal (5), welcher einen Auslass (4) und einen Ringkanal (7) mit Bohrungen (6) aufweist, wobei das Diisocyanat (20) über die Bohrungen (6) in die Polyhydroxyverbindung und/oder Polyaminoverbindung (30) eingedüst und die Mischung aus Diisocyanat (20) und Polyhydroxyverbindung und/oder Polyaminoverbindung (30) in einer Verweilzeitstrecke (4) umgesetzt wird, dadurch gekennzeichnet, dass der Düsenkanal (5) einen im Wesentlichen konstanten Durchmesser hat.

EP 1 614 701 A2

**Beschreibung**

Die Erfindung betrifft ein Verfahren zur Herstellung von Polyurethan- und/oder Polyurethanharnstoff-Prepolymeren durch Vermischen wenigstens eines Diisocyanats und einer Polyhydroxyverbindung und/oder Polyaminoverbindung in einer Mischdüse.

Aus EP-A 0 554 718 ist ein Verfahren zur kontinuierlichen Herstellung von Polyurethan- und Polyurethanharnstoff-Prepolymeren durch Umsetzung von Polyisocyanaten mit Polyhydroxylverbindungen und/oder Polyaminoverbindungen sowie gegebenenfalls Monoisocyanaten und/oder gegenüber Isocyanaten monofunktionellen Verbindungen und/oder Aktivatoren, Stabilisatoren, Gleitmitteln und weiteren, an sich bekannten Zuschlagstoffen bekannt. Die isocyanathaltige und die hydroxylhaltige und/oder die aminhaltige Komponente werden in einer Düse zusammengeführt, in dem eine der beiden Komponenten in der Düse eingeschnürt und die andere Komponente im Bereich dieser Einschnürung dem Strom der ersten Komponente in mehreren Teilströmen durch eine entsprechende Anzahl von über den Umfang der Einschnürung verteilten Bohrungen zugeführt wird. Auf einer der Einschnürung nachgeschalteten Verweilzeitstrecke in der Düse werden die Komponenten umgesetzt.

Die in EP-A 0 554 718 beschriebene Düsenkonstruktion hat sich für den Langzeitbetrieb des Verfahrens als nachteilig erwiesen, da regelmäßig Verstopfungen der Düsenbohrungen z.T. zu stundenlangen Anfahrproblemen bzw. Ausfallzeiten der Anlage geführt haben. Die Verstopfungen erforderten unter Einhaltung von Sicherheitsmaßnahmen umständliche Demontage und Reinigungsarbeiten.

Aufgabe der vorliegenden Erfindung ist es daher, ein Verfahren zur Herstellung von Polyurethan- und/oder Polyurethanharnstoff-Prepolymeren zur Verfügung zu stellen, welches die Nachteile des Standes der Technik nicht aufweist.

Gegenstand der Erfindung ist ein Verfahren zur Herstellung von Polyurethan- und/oder Polyurethanharnstoff-Prepolymeren, bei dem wenigstens ein Diisocyanat mit einer Polyhydroxyverbindung und/oder Polyaminoverbindung mit einem Molekulargewicht von 400 bis 10000 in einer Mischdüse vermischt wird, welche wenigstens einen Einlass für das Diisocyanat und einen Einlass für die Polyhydroxyverbindung und/oder Polyaminoverbindung aufweist, wobei der Einlass stromabwärts zu dem Einlass angeordnet ist, sowie einen Düsenkanal aufweist, welcher einen Ringkanal mit Bohrungen aufweist, wobei das Diisocyanat über die Bohrungen (6) in die Polyhydroxyverbindung und/oder Polyaminoverbindung eingedüst und die Mischung aus Diisocyanat und Polyhydroxyverbindung und/oder Polyaminoverbindung in einer Verweilzeitstrecke umgesetzt wird, dadurch gekennzeichnet, dass der Düsenkanal einen im Wesentlichen konstanten Durchmesser hat.

Im Langzeitbetrieb hat sich die Düse ohne Einschnürung im Düsenkanal im Bereich des Einlasses für das Diisocyanat und ohne anschließende, d.h. stromabwärts angeordnete, Aufweitung des Düsenkanals als vorteilhaft erwiesen. Nach dem erfindungsgemäßen Verfahren lassen sich Polyurethan-Prepolymere im Langzeitbetrieb ohne wesentliche Verstopfungen der Düsenbohrungen herstellen. Des weiteren ist die Spülung der Mischdüse zu Reinigungszwecken erheblich vereinfacht gegenüber der aus dem Stand der Technik bekannten Düse. Der Aufbau der Mischdüse, welche in dem erfindungsgemäßen Verfahren zum Einsatz kommt, ist erheblich einfacher, da der Düsenkanal einen im Wesentlichen konstanten Durchmesser aufweist im Gegensatz zu der aus dem Stand der Technik bekannten Mischdüse. Der Durchmesser ist insbesondere in dem Bereich konstant, in dem das Diisocyanat in die Polyhydroxy- und/oder Polyaminoverbindung eingedüst wird. Der Durchmesser ist bevorzugt im Wesentlichen über die gesamte Länge des Düsenkanals im Wesentlichen konstant.

Die Bohrungen, durch die das Diisocyanat in die Polyhydroxy- und/oder Polyaminoverbindung eingedüst wird, sind bevorzugt rund, können jedoch auch von beliebiger anderer geometrischer Form sein. Sie sind ringförmig in der Wand des Düsenkanals angeordnet. Benachbarte Düsenbohrungen sind beispielsweise in gleichen Abständen oder in beliebigen Abständen voneinander ringförmig angeordnet sein. Im Gegensatz zu der Düsenanordnung in EP-A 0 554 718, bei der einander gegenüberliegende Bohrungen gegeneinander versetzt sind, damit die Teilströme aneinander vorbei zielen, sind die Düsenbohrungen vorzugsweise so angeordnet, dass jeweils zwei Bohrungen einander gegenüberliegen, um die Durchmischung zu erhöhen. Ferner können die Düsenbohrungen ringförmig auf mehrere Ebenen quer zur Strömungsrichtung verteilt sein, wobei die Bohrungen der verschiedenen Ebenen beliebig zueinander, z.B. versetzt, angeordnet sein können.

Vorzugsweise besitzen die Bohrungen einen Durchmesser von 0,5 bis 10 mm, besonders bevorzugt von 1 bis 2 mm. Bevorzugt sind 2 bis 8 Bohrungen vorgesehen, besonders bevorzugt 4 bis 6.

Vorzugsweise beträgt der Abstand zwischen dem Einlass für das Diisocyanat und dem Einlass für die Polyhydroxyverbindung und/oder Polyaminoverbindung maximal das Zehnfache, besonders bevorzugt das Zweifache bis Dreifache, des Durchmessers des Düsenkanals.

Die Länge des Düsenkanals beträgt bevorzugt mindestens das Zehnfache des Durchmessers des Düsenkanals.

Die Strömungsgeschwindigkeit der Polyhydroxyverbindung und/oder Polyaminoverbindung beträgt vor dem Eindüsen des Diisocyanats bevorzugt 1 bis 10 ms$^{-1}$.

Ein weiterer Vorteil des erfindungsgemäßen Verfahrens besteht darin, dass die Volumenströme des Diisocyanats und der Polyhydroxyverbindung unabhängig voneinander gewählt werden können. Vorzugsweise ist der Volumenstrom der Polyhydroxyverbindung und/oder Polyaminoverbindung größer als der des Diisocyanats. Es kann jedoch auch umgekehrt der Volumenstrom des Diisocyanats größer gewählt werden als der der Polyhydroxyverbindung und/oder Polyaminoverbindung. Außerdem ist bei dem erfindungsgemäßen Verfahren vorteilhaft, dass die Strömungsgeschwindigkeit der Polyhydroxyverbindung und/oder Polyaminoverbindung bis zu zehnfach größer gewählt werden kann als bei dem aus dem Stand der Technik bekannten Verfahren. Eine höhere Strömungsgeschwindigkeit ist wünschenswert, da mit ihr eine höhere Effizienz der Durchmischung erreicht wird.

Um eine hohe Ausbeute zu erzielen, wird in einer bevorzugten Ausführungsform des Verfahrens ein Leistungsverhältnis $c_A/(i \cdot c_S)$ von 0,002 bis 10 gewählt, wobei das Leistungsverhältnis wie folgt definiert ist (Gleichung 1):

$$c_A / (i \cdot c_S) = (\rho_A \cdot V'_A \cdot v_A^2) / i \cdot (\rho_S \cdot V'_S \cdot v_S^2)$$

worin $c_A$ den Produktstrom der Polyhydroxyverbindung und/oder Polyaminoverbindung (Index A), $c_S$ den Produktstrom des Diisocyanats (Index S), $\rho$ die Dichte, V' den Volumenstrom, v die Strömungsgeschwindigkeit und i die Anzahl der Teilströme, d.h. die Anzahl der Düsenbohrungen, bezeichnen. Als Leistungsverhältnis im Sinne der vorliegenden Erfindung ist somit das Verhältnis aus dem Produkt aus Dichte, Volumenstrom und dem Quadrat der Strömungsgeschwindigkeit der Polyhydroxyverbindung und/oder Polyaminoverbindung zu der Summe der Teilprodukte aus Dichte, Volumenstrom und dem Quadrat der Strömungsgeschwindigkeit des Diisocyanats anzusehen.

Für das erfindungsgemäße Verfahren können als Diisocyanat die an sich bekannten aliphatischen, cycloaliphatischen, araliphatischen, aromatischen und heterocyclischen Diisocyanate eingesetzt werden. Bevorzugte Diisocyanate sind aromatische Diisocyanate, Naphthylen-1,5-diisocyanat, 3,3'-Dimethyl-4,4'-diisocyanatodiphenyl (TODI), 1,4-Diisocyanatobenzol und das entsprechende hydrierte Produkt, Toluylendiisocyanate und Diphenylmethandiisocyanat-Isomere. Besonders bevorzugt sind 4,4'-Diisocyanatodiphenylmethan und dessen Isomere sowie ein Isomerengemisch aus 4,4'-Diisocyanatodiphenylmethan, bis zu 5 Mol-%, insbesondere 1-4 Mol-%, 2,4'-Diisocyanatodiphenylmethan und geringe Mengen von 2,2'-Diisocyanatodiphenylmethan-Isomeren.

Die genannten Diisocyanate können gegebenenfalls zusammen mit bis etwa 15 Mol-% (bezogen auf Diisocyanat) eines höherfunktionellen Polyisocyanats eingesetzt werden. Die Menge des höherfunktionellen Polyisocyanats muss jedoch so begrenzt sein, dass nach der Weiterverarbeitung des Prepolymeren zu einem thermoplastischen Polymeren ein noch schmelzbares bzw. thermoplastisches Polyurethanelastomeres erhalten wird. Um eine zu starke chemische Vernetzung des Produktes zu vermeiden, muss die Verwendung einer größeren Menge an höherfunktionellen Polyisocyanaten im allgemeinen dadurch ausgeglichen werden, dass entweder die Polyhydroxy- und/oder Polyaminoverbindung anteilig durch eine oder mehrere Monohydroxy- und/oder Monoaminoverbindung oder das Diisocyanat anteilig durch Monoisocyanat ersetzt wird. Als Monoaminoverbindung kann beispielsweise Butyl- oder Dibutylamin, Hydroxylamin, Stearylamin, N-Methylstearylamin verwendet werden. Als Monohydroxyverbindung kommen beispielsweise Butanol-1, 2-Ethylhexanol-1, Dodecanol-1, Isobutanol oder tert.-Butanol, Cyclohexanol oder Ethylenglykolmonomethylether und Stearylalkohol in Betracht.

Ferner können in dem Fachmann bekannter Form monofunktionelle Verbindungen wie Monoisocyanate, Monoalkohole und/oder Monoamine in geringen Mengen von z.B. 0,01 bis 4 Gew.-% bezogen auf Polyurethan-Feststoff als Kettenabbrecher eingesetzt werden. Beispiele für Monoalkohole sind Butanol, 2-Ethylenhexanol, Isobutylalkohol, Octanol-1 und Stearylalkohol. Beispiele für Monoamine sind Anilin, Dibutylamin, N-Methylstearylamin und Piperidin.

Nach dem erfindungsgemäßen Verfahren bevorzugte Polyhydroxyverbindungen sind Polyester-, Polyestercarbonat-, und Polyetherdiole, z.B. Polyesterdiole aus geradkettigen oder verzweigten aliphatischen und/oder cycloaliphatischen Diolen und aliphatischen Dicarbonsäuren, insbesondere Adipinsäure. Diese können auch in geringen Mengen aromatische Dicarbonsäuren, insbesondere Phthalsäure und gegebenenfalls Terephthalsäure sowie deren Hydrierungsprodukte enthalten. Ferner sind Hydroxylpolycarbonate und Hydroxylpolycaprolactone geeignet. In einer besonders bevorzugten Ausführungsform wird Butandiol-1,4-adipat vom Molekulargewicht 1500 bis 5000 verwendet. Außerdem werden vorzugsweise Hydroxyetherdiole auf Basis von Ethylenoxid, Propylenoxid oder Mischpolyether aus Propylenoxid und/oder Ethylenoxid und/oder Tetrahydrofuran, z.B. Hydroxyetherdiole auf Basis von Tetrahydrofuran mit einem Molekulargewicht von 1000 bis 3000. Geeignete Polyole sind z.B. in DE-A 23 02 564, DE-A 24 23 764, DE-A 25 49 372, DE-A 24 02 840 und DE-A 24 57 387 beschrieben.

Anstelle der Polyhydroxyverbindung oder im Gemisch mit diesen können auch Polyaminoverbindungen, vorzugsweise mit primären aromatischen Aminoverbindungen, eingesetzt werden. Bevorzugte Polyaminoverbindungen werden beispielsweise durch, vorzugsweise basische, Hydrolyse von entsprechenden NCO-Prepolymeren auf der Basis von höhermolekularen Polyhydroxyverbindungen und überschüssigen aromatischen Diisocyanaten hergestellt. Beispiele für derartige Verfahren sind z.B. in DE-A 29 48 419, DE-A 30 39 600 und DE-A 31 12 118 beschrieben. In DE-A 29 48 419 werden auch weitere Verfahren zur Herstellung von aromatischen Aminoverbindungen höhermolekularer Struktur, sogenannte Aminopolyether, wie sie für das erfindungsgemäße Verfahren geeignet sind, offenbart.

Vor und/oder während und/oder nach der Polyurethan-Reaktion, welche durch das Einmischen des Diisocyanats in die Polyhydroxyverbindung und/oder Polyaminoverbindung eintritt, können die üblichen Zusatzstoffe wie Katalysatoren, Trennmittel, Antistatika, Flammschutzmittel, Einfärbmittel, zugegeben werden. Auch die Zugabe von Antioxidantien und UV-Absorber ist möglich. Als Katalysatoren kommen beispielsweise tertiäre Amine, organische Metallverbindungen, insbesondere organische Zinn-, Blei-, und Titanverbindungen eingesetzt werden, z.B. Zinn-II-Acetat, Zinn-II-Ethylhexoat, Dibutylzinndilaurat oder Bleiacetat. Als Trennmittel werden vorzugsweise Wachse oder Öle, langkettige Verbindungen mit Carboxyl-, Ester-, Amid-, Urethan- oder Harnstoffgruppen sowie Silicone verwendet.

Die Mengen an Reaktionskomponenten in dem erfindungsgemäßen Verfahren werden in der Regel so gewählt, dass das NCO/OH- bzw. NCO/NHR-Verhältnis von Isocyanat zu OH-Verbindung bzw. Aminverbindung von 11:1 und 1:1, vorzugsweise von 6:1 bis 3:1, beträgt.

Nachfolgend wird die Erfindung anhand der beigefügten Zeichnung näher beschrieben.

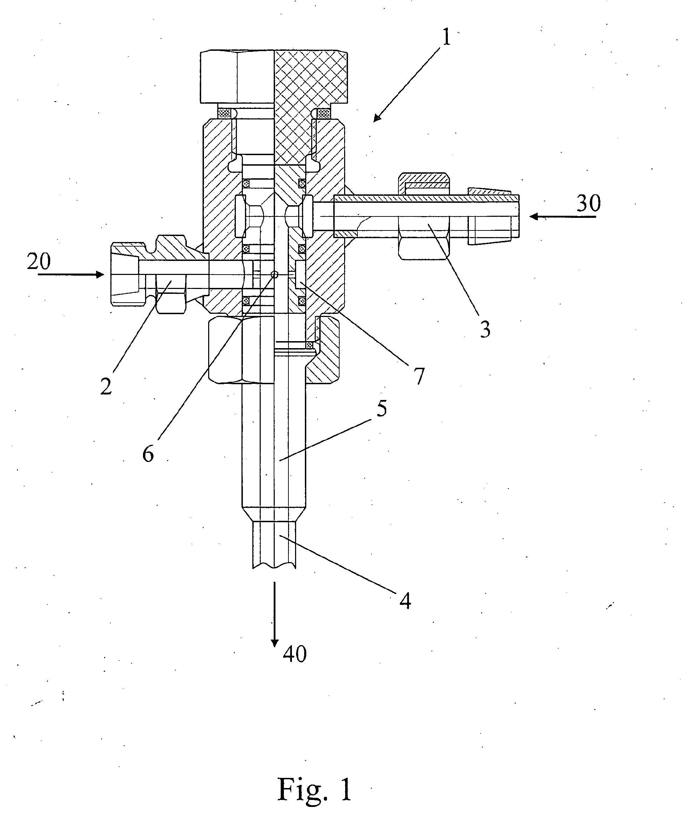

Figur 1 zeigt eine Ausführungsform einer Mischdüse, wie sie für das erfindungsgemäße Verfahren eingesetzt werden kann. Die Mischdüse 1 besitzt einen Einlass 3 für die Polyhydroxyverbindung und/oder Polyaminoverbindung 30 und einen Einlass 2 für das Diisocyanat 20. Beide Einlässe 2, 3 sind in dieser Ausführungsform im Wesentlichen senkrecht zu dem Düsenkanal 5 der Mischdüse 1 angeordnet, wobei sich der Einlass 2 stromabwärts von dem Einlass 3 befindet. Der Düsenkanal 5 mündet in eine Verweilzeitstrecke 4, in der die Umsetzung der beiden Komponenten 20, 30 in ein Prepolymer 40 erfolgt. Das Diisocyanat 20 wird in die Polyhydroxyverbindung und/oder Polyaminoverbindung 30 eingedüst. Dazu befindet sich in dem Düsenkanal 5 im Bereich des Einlasses 2 ein Ringkanal 7. Im Bereich des Ringkanals 7 sind ringförmig mehrere Bohrungen 6 vorgesehen, durch die das Diisocyanat 20 in den Düsenkanal 5 strömt, wo es sich mit der Polyhydroxyverbindung und/oder Polyaminoverbindung 30 vermischt. In der dargestellten Ausführungsform beträgt der Abstand zwischen den beiden Einlässen 2, 3 das 2,5-fache des Durchmessers des Düsenkanals 5.

## Beispiele:

## Beispiel 1:

100 Gew.-Teile eines Polyesters aus Adipinsäure und Butandiol-1,4 (OH-Zahl 50, Säurezahl = 0,7), welcher mit 10 ppm Titantetrabutylat aktiviert wurde, werden kontinuierlich seitlich durch zwei Bohrungen (d= 6 mm) in den Düsenkanal (d = 7 mm) eingeleitet. 17 mm weiter in Flussrichtung werden 150 Gew.-Teile flüssiges Diphenylmethan-4,4'-diisocyanat seitlich über 8 Bohrungen (d = 1.5 mm) in den Polyesterstrom kontinuierlich eingetragen, durch Verwirbelung gemischt und in dem nachgeschaltetem Reaktor (Verweilzeitstrecke) zur Reaktion gebracht. Von dem entstandenen Reaktionsprodukt am Ende des Reaktors wurde eine Probe entnommen und das Restisocyanat durch potentiometrische Titration mit Dibutylaminlösung und alkoholischer Salzsäure bestimmt.

Rest-NCO-Gehalt = 18,91 Gew.-% entspricht 96,8 % Umsatz zum Prepolymer; theoretischer NCO-Gehalt bei 100 % Umsatz = 18,95 Gew.%.

Auch im Langzeitbetrieb waren keine Verstopfungen der Bohrungen zu beobachten.

## Beispiel 2:

50 Gew.-Teile eines Polyesters aus Adipinsäure und Butandiol-1,4 (OH-Zahl 50, Säurezahl = 0,7), welcher mit 10 Titantetrabutylat aktiviert und 50 Gew.-Teile eines Polycarbonatdiols aus Diphenylcarbonat und Hexandiol-1,6 (MG = 2000) vorgemischt wurde, werden kontinuierlich seitlich durch zwei Bohrungen (d = 6mm) in den Düsenkanal (d = 7 mm) eingeleitet. 17 mm weiter in Flussrichtung werden 49 Gew.-Teile flüssiges Diphenylmethan-4,4-diisocyanat über 8 Bohrungen (d = 1,5 mm) in den Polyesterstrom seitlich eingetragen, durch Verwirbelung gemischt und in den nachgeschalteten Reaktor (Verweilzeitstrecke) zur Reaktion gebracht. Von dem entstandenen Reaktionsprodukt am Ende des Reaktors wurde eine Probe entnommen und der Restisocyanatgehalt durch potentiometrische Titration mit Dibutylaminlösung und alkolischer Salzsäure bestimmt.

Rest-NCO-Gehalt = 8.64 Gew.-%, entspricht 99,8 % Umsatz zum Prepolymer; theoretischer NCO-Gehalt bei 100 % Umsatz = 8.65 Gew.-%.

Auch im Langzeitbetrieb waren keine Verstopfungen der Bohrungen zu beobachten.

## Patentansprüche

1. Verfahren zur Herstellung von Polyurethan- und/oder Polyurethanharnstoff-Prepolymeren, bei dem wenigstens ein Diisocyanat (20) mit einer Polyhydroxyverbindung und/oder Polyaminoverbindung (30) mit einem Molekulargewicht von 400 bis 10000 in einer Mischdüse (1) vermischt wird, welche wenigstens einen Einlass (2) für das Diisocyanat (20) und einen Einlass (3) für die Polyhydroxyverbindung und/oder Polyaminoverbindung (30) aufweist, wobei der Einlass (2) stromabwärts zu dem Einlass (3) angeordnet ist, sowie einen Düsenkanal (5) aufweist, welcher einen Ringkanal (7) mit Bohrungen (6) aufweist, wobei das Diisocyanat (20) über die Bohrungen (6) in die Polyhydroxyverbindung und/oder Polyaminoverbindung (30) eingedüst und die Mischung aus Diisocyanat (20) und Polyhydroxyverbindung und/oder Polyaminoverbindung (30) in einer Verweilzeitstrecke (4) umgesetzt wird, **dadurch gekennzeichnet, dass** der Düsenkanal (5) einen im Wesentlichen konstanten Durchmesser hat.

2. Verfahren nach Anspruch 1, **dadurch gekennzeichnet, dass** der Abstand zwischen dem Einlass (2) für das Diisocyanat (20) und dem Einlass (3) für die Polyhydroxyverbindung und/oder Polyaminoverbindung (30) maximal das Zehnfache, vorzugsweise das Zweifache bis Dreifache, des Durchmessers des Düsenkanals (5) beträgt.

3. Verfahren nach einem der Ansprüche 1 oder 2, **dadurch gekennzeichnet, dass** die Länge des Düsenkanals (5) mindestens das Zehnfache des Durchmessers des Düsenkanals (5) beträgt.

4. Verfahren nach einem der Ansprüche 1 bis 3, **dadurch gekennzeichnet, dass** die Strömungsgeschwindigkeit der Polyhydroxyverbindung und/oder Polyaminoverbindung (30) vor dem Eindüsen des Diisocyanats (20) 1 bis 10 $ms^{-1}$ beträgt.

5. Verfahren nach einem der Ansprüche 1 bis 4, **dadurch gekennzeichnet, dass** das Verhältnis aus dem Produkt aus Dichte, Volumenstrom und dem Quadrat der Strömungsgeschwindigkeit der Polyhydroxyverbindung und/oder Polyaminoverbindung (30) zu der Summe der Teilprodukte aus Dichte, Volumenstrom und dem Quadrat der Strömungsgeschwindigkeit des Diisocyanats (20) 0,002 bis 10 beträgt.

Fig. 1